# EUROPÄISCHE PATENTSCHRIFT

(11) **EP 2 318 257 B1**
(45) Veröffentlichungstag und Bekanntmachung des Hinweises auf die Patenterteilung: **18.10.2017**
(21) Anmeldenummer: 08801196.0
(22) Anmeldetag: 21.08.2008
(51) Int. Cl.: B62B 5/06

(54) **GRIFF FÜR EINEN TRANSPORTWAGEN**
HANDLE FOR A TRANSPORT CART
POIGNÉE POUR UN VÉHICULE DE TRANSPORT

(43) Veröffentlichungstag der Anmeldung: 11.05.2011
(73) Patentinhaber: Filosi, Andreas, 82178 Puchheim (DE); Wieth, Franz, 82178 Puchheim (DE)
(72) Erfinder: Sonnendorfer, Horst, deceased (DE); Wieth, Franz, 82178 Puchheim (DE)
(74) Vertreter: Braun-Dullaeus, Karl-Ulrich
(86) Internationale Anmeldenummer: PCT/DE2008/001373
(87) Internationale Veröffentlichungsnummer: WO 2010/020200

(56) Entgegenhaltungen:
- WO-A-2007/062613
- DE-A1- 19 726 661
- JP-A- 2007 245 794
- US-A- 5 820 142
- US-B1- 6 522 255

## Beschreibung

### Technisches Gebiet

Die Erfindung betrifft einen Griff für Transportwagen, welcher leitfähige Bereiche aufweist Der Benutzer des Transportwagens berührt beim Schieben des Transportwagens diese leitfähigen Bereiche und eine beim Schieben des Einkaufswagens eventuell entstehende elektrostatische Aufladung wird durch den Benutzer abgeleitet. Dies erfolgt für den Benutzer unmerklich und ungefährlich.

### Stand der Technik

Ein derartiger Griff für einen Einkaufswagen ist aus dem Deutschen Gebrauchsmuster DE 202004009005 U1 bekannt.

Bei dem bekannten Griff handelt es sich um einen Griff, welcher ein über seine Länge homogen verlaufendes Profil aufweist. Im sogenannten Koextrusionsverfahren ist das Profil aus verschiedenen Materialien hergestellt worden.

Das elektrisch leitende Material ist mechanisch nicht so belastbar wie das übliche für Griffe verwendete Material. Beim Koextrusionsverfahren ist es nun möglich gezielt für einen kleinen Bereich des Profils das mechanisch weniger belastbare elektrisch leitende Material zu verwenden und den überwiegenden Teil des Profils aus einem mechanisch stark belastbaren Material herzustellen.

Nachteilig bei den bekannten Griffen mit elektrischer Leitfähigkeit ist nun die Tatsache, dass sich nur Griffe herstellen lassen, die über ihre Länge betrachtet ein homogenes Profil aufweisen.

Die bekannte Lösung zur Herstellung von Griffen mit elektrischer Leitfähigkeit ist nicht anwendbar auf Griffe, die kein über ihre Länge betrachtet homogenes Profil aufweisen sondern eine komplexe Form haben, die beispielsweise im Spritzgussverfahren hergestellt wird. Diese so komplex gestalteten Griffe können auch nicht ausschließlich aus leitfähigem Material bestehen, da dieses nicht ausreichend mechanisch belastbar ist.

Das US 6 522 255 B1 zeigt einen Griff, bei dem seitliche Bereiche aus einem Material bestehen, welches gegenüber dem Material der anderen Bereiche eine erhöhte Leitfähigkeit aufweisen.

### Offenbarung der Erfindung

### Technische Aufgabe

Es ist Aufgabe der Erfindung, Griffe, die eine komplexere Form aufweisen und beispielsweise im Spritzgussverfahren hergestellt werden ebenfalls mit einer elektrischen Leitfähigkeit auszustatten, ohne dass die Stabilität verringert wird.

### Technische Lösung

Die Überlegungen, die zur Entstehung der vorliegenden Erfindung führten gingen davon aus, dass es nicht nötig ist, den leitfähigen Bereich des Griffes über dessen gesamte Länge verlaufen zu lassen, so wie es beim bekannten mittels Koextrusion hergestellten Griff der Fall ist.

Die gestellte Aufgabe wurde gelöst, indem nur in den Bereichen des Griffes, der beim Schieben des Transportwagens vom Benutzer berührt wird eine elektrische Leitfähigkeit vorhanden ist.

Die erfinderische Lösung sieht vor, dass sich die leitfähigen Bereiche des Griffes genau in den Bereichen befinden, die dem Benutzer beim Manövrieren die günstigsten Hebelkräfte zur Verfügung stellen. Diese befinden sich in den seitlichen Bereichen des Griffes.

### Vorteilhafte Wirkungen

Die erfinderische Lösung bewirkt vorteilhaft, dass für den Griff hauptsächlich ein hinsichtlich Kosten, Farbbeständigkeit und mechanischer Belastung bewährtes Material verwendet wird und nur ein kleiner Berech des Griffes mit einem auf Leitfähigkeit spezialisiertem Material ausgestattet sein muss, wodurch die mechanischen Nachteile des leitfähigen Materials keinen Einfluss auf die Stabilität des gesamten Griffes haben.

### Kurze Beschreibung der Zeichnungen

Nachfolgend ist die Erfindung anhand einer Figur näher beschrieben.

Der gezeigte Griff 1 erfüllt über die eigentliche Funktion eines Schiebegriffs hinaus noch weitere Funktionen. In der Mitte des Griffbereiches kann beispielsweise eine zwar nicht gezeigte aber für den Fachmann leicht vorstellbare Anzeigefläche oder Aufnahme für ein elektronisches Gerät implementiert sein. Auch ein Pfandschloss kann in diesem Griff integriert sein.

Der Benutzer greift den Griff 1 beim Schieben mit hoher Wahrscheinlichkeit an einer der seitlichen, ergonomisch geformten Haltesprossen 2, denn dort wirken in für den Benutzer vorteilhafter Weise bei Kurvenfahrten oder sonstigem Manövrieren die günstigsten Hebelkräfte.

Die in unterschiedlicher Höhe über dem Boden angeordneten Haltesprossen 2 geben dem Benutzer je nach seiner Körpergröße die Möglichkeit, die jeweils individuell angenehme Position für seine Hände zu finden. An den Haltesprossen befinden sich jeweils Elemente 3 aus leitfähigem Material.

Diese leitfähigen Elemente 3 sind elektrisch über eine hier nicht gezeigte Verbindung mit metallischen Teilen des Einkaufswagens verbunden. Eine theoretisch beim Schieben des Einkaufswagens entstehende elektrostatische Aufladung des gesamten Einkaufswagens entsteht bei der vorliegenden Erfindung vorteilhaft deshalb nicht, weil die geringen Ströme, die beim Schieben entstehen sofort durch den Benutzer, der den Einkaufswagen an diesen leitfähigen Elementen 3 berührt abgeleitet werden. Dieses präventive Ableiten der geringen Ströme erfolgt für den Benutzer gänzlich unmerklich und ungefährlich.

Der Griff 1 kann im Prinzip jede beliebige Form aufweisen und kann aus einem beliebigen Material bestehen. Zur Umsetzung der Erfindung muss der Griff nur die leitfähigen Elemente 3 aufweisen.

Die Befestigung der leitfähigen Elemente 3 kann auf jede beliebige Art und Weise erfolgen.

Beispielsweise ist es möglich, die leitfähigen Elemente 3 aus einem dünnen Material herzustellen und auf den Griff 3 aufzukleben, was den Vorteil hat, dass die aufgeklebten leitfähigen Elemente 3 nicht auftragen und auch nicht die Haptik stören. Diese Lösung eignet sich bevorzugt, um auch vorhandene Griffe nachträglich mit leitfähigen Elementen 3 auszustatten und so dem gesamten Einkaufswagen die vorteilhafte Eigenschaft der präventiven Ableitung zu verleihen.

Auch ist es möglich, die leitfähigen Elemente 3 mittels eines aufgebrachten Leitlackes herzustellen. Die Verwendung von Leitlack ist ebenfalls gut geeignet, um vorhandene Griffe nachträglich mit leitfähigen Elementen 3 auszustatten.

Die leitfähigen Elemente 3 in einer weiteren möglichen Ausführungsform sind aus massivem Material und sind in eine Ausnehmung des Griffes 1 einsetzbar. Die massiven, einsetzbaren leitfähigen Elemente 3 sind beispielsweise durch eine Schnapp- bzw. Rastverbindung mit dem Griff 1 verbindbar.

Die massiven leitfähigen Elemente 3 können dann auch aus einem weicheren Material bestehen als der übrige Griff 1, hierdurch wird beim Benutzer ein angenehmes haptisches Gefühl erzeugt.

Grundsätzlich sind als Materialien für die leitfähigen Bereiche alle Materialien geeignet, mit denen sich ein Oberflächenwiderstand der leitfähigen Bereiche von weniger als 10 Mega Ohm realisieren lässt.

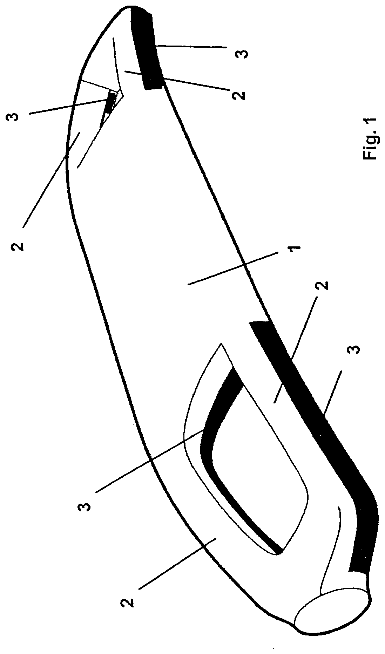

In der Zeichnung nicht dargestellt, aber für den Fachmann jederzeit nachvollziehbar besteht eine elektrisch leitende Verbindung zwischen den leitfähigen Bereichen des Griffes und dem übrigen Teilen des Transportwagens. Die leitende Verbindung besteht bevorzugt zu den metallenen Teilen des Transportwagens.

Hierdurch wird die Ladung, welche beim Schieben des Transportwagens in die funktional als Kondensator wirkenden Teile des Transportwagens gelangt sofort wieder abgeleitet und es findet eben keine Aufladung statt.

### Gewerbliche Anwendbarkeit

Die Erfindung ist bei Transportwagen verschiedenster Art gewerblich anwendbar.

## Patentansprüche

1. Griff (1) für Transportwagen, welcher verschiedene Bereiche (2,3) aufweist, wobei die verschiedenen Bereiche (2, 3) aus unterschiedlichen Materialien bestehen, wobei seitliche Bereiche des Griffes (1) aus einem Material bestehen, welches eine gegenüber dem Material, aus dem die anderen Bereiche bestehen, eine erhöhte elektrische Leitfähigkeit aufweist, wobei seitliche Bereiche des Griffs (1) mit erhöhter elektrischer Leitfähigkeit als leitfähige Elemente (3) ausgebildet sind, die an dem Griff (1) befestigt sind, **dadurch gekennzeichnet, dass**
die seitlichen Bereiche des Griffs (1) je zwei Haltesprossen (2) aufweisen, an denen die leitfähigen Elemente (3) jeweils angeordnet sind.

2. Griff nach Anspruch 1
**dadurch gekennzeichnet, dass**
die Bereiche mit erhöhter elektrischer Leitfähigkeit einen Oberflächenwiderstand von weniger als 10 Megaohm haben.

3. Griff nach einem der vorangegangenen Ansprüche,
**dadurch gekennzeichnet, dass**
die leitfähigen Bereiche auf den übrigen Griffkörper aufgeklebt und / oder anderweitig flach auf dem Griffkörper aufgetragen sind.

4. Griff nach einem der vorangegangenen Ansprüche
**dadurch gekennzeichnet, dass**
die leitfähigen Bereiche aus einem massiven harten oder weichen Material bestehen.

5. Griff nach einem der vorangegangenen Ansprüche,
**dadurch gekennzeichnet, dass**
die leitfähigen Bereiche in Ausnehmungen des Griffes (1) eingesetzt sind.

6. Griff nach einem der vorangegangenen Ansprüche,
**dadurch gekennzeichnet, dass**
die Griffbereiche mittels einer Rast- oder Schnappverbindung in Ausnehmungen des Griffes (1) eingesetzt sind.

7. Griff nach einem der vorangegangenen Ansprüche,
**dadurch gekennzeichnet, dass**
die leitfähigen Bereiche elektrisch leitend mit dem Chassis des Transportwagens verbunden sind.

8. Griff nach einem der vorangegangenen Ansprüche,
**dadurch gekennzeichnet, dass**
die Haltesprossen (2) in unterschiedlicher Höhe über dem Boden angeordnet sind.

## Claims

1. Handle (1) for transport carriage having different areas (2, 3), wherein the different areas (2, 3) are made from different materials, wherein lateral areas of the handle (1) are made from a material which has increased electrical conductivity relative to the material from which the other area are made, wherein lateral areas of the handle (1) with greater electrical conductivity are constructed as conductive elements (3) which
are fastened to the handle (1),
**characterised in that**
the lateral areas of the handle (1) each have two holding bars (2) on each of which the conductive elements (3) are arranged.

2. Handle according to claim 1,
**characterised in that**
the areas with increased electrical conductivity have a surface resistance of less than 10 megohms.

3. Handle according to one of the preceding claims,
**characterised in that**
the conductive areas are attached flat to the rest of the handle body by gluing and/or by other means.

4. Handle according to one of the preceding claims,
**characterised in that**
the conductive areas are made from a solid hard or soft material.

5. Handle according to one of the preceding claims,
**characterised in that**
the conductive areas are inserted in recesses in the handle (1).

6. Handle according to one of the preceding claims,
**characterised in that**
the handle areas are inserted in recesses in the handle (1) by means of a detent or snap connection.

7. Handle according to one of the preceding claims,
**characterised in that**
the conductive regions are connected to the chassis of the transport carriage in electrically conductive manner.

8. Handle according to one of the preceding claims,
**characterised in that**
the holding bars (2) are arranged at different heights above the ground.

## Revendications

1. Poignée (1) pour un véhicule de transport, présentant plusieurs régions (2, 3), les différentes régions (2, 3) étant constituées de matériaux distincts, des régions latérales de la poignée (1) étant constituées d'un matériau présentant une conductivité électrique plus élevée par rapport au matériau constituant les autres régions, des régions latérales de la poignée (1) avec une conductivité électrique plus élevée étant conçus comme des éléments conducteurs (3) fixés à la poignée (1),
**caractérisée en ce que**
les régions latérales de la poignée (1) présentent respectivement deux barreaux de prise (2) sur lesquels sont respectivement disposés les éléments conducteurs (3).

2. Poignée selon la revendication 1,
**caractérisée en ce que**
les régions avec une conductivité électrique plus élevée présentent une résistance de surface inférieure à 10 Mégaohms.

3. Poignée selon l'une des revendications précédentes,
**caractérisée en ce que**
les régions conductrices sont collées sur le reste du corps de poignée et/ou appliquées d'une autre manière de façon plane sur le corps de poignée.

4. Poignée selon l'une des revendications précédentes,
**caractérisée en ce que**
les régions conductrices sont constituées d'un matériau massif dur ou tendre.

5. Poignée selon l'une des revendications précédentes,
**caractérisée en ce que**
les régions conductrices sont insérées dans des évidements de la poignée (1).

6. Poignée selon l'une des revendications précédentes,
**caractérisée en ce que**
les régions de poignée sont insérées dans des évidements de la poignée (1) à l'aide d'un assemblage par encliquetage ou par enclenchement.

7. Poignée selon l'une des revendications précédentes,
**caractérisée en ce que**
les régions conductrices sont reliées de façon électriquement conductrice au châssis du véhicule de transport.

8. Poignée selon l'une des revendications précédentes,
**caractérisée en ce que**
les barreaux de prise (2) sont disposés à des hauteurs différentes au-dessus du sol.
